Europäisches Patentamt

(19) European Patent Office

Office européen des brevets

(11) EP 0 705 540 A2

(12) EUROPEAN PATENT APPLICATION

(43) Date of publication:
10.04.1996 Bulletin 1996/15

(51) Int. Cl.$^6$: **A23D 9/00**, A23D 7/00

(21) Application number: 95202557.5

(22) Date of filing: 22.09.1995

(84) Designated Contracting States:
AT BE CH DE DK ES FR GB GR IE IT LI NL PT SE

(30) Priority: 07.10.1994 DE 9416185 U
07.10.1994 DE 9416184 U

(71) Applicants:
• UNILEVER N.V.
NL-3000 DK Rotterdam (NL)
Designated Contracting States:
GB IE
• UNILEVER PLC
London EC4P 4BQ (GB)
Designated Contracting States:
BE CH DE DK ES FR GR IT LI NL PT SE AT

(72) Inventors:
• Hendrickx, Henricus Arnoldus C. M.
D-27777 Ganderkesee (DE)
• Wienboeker, Ulf
D-28757 Bremen (DE)
• Pajung, Horst
D-27751 Delmenhorst (DE)

(74) Representative: Rots, Maria Johanna Francisca et al
Unilever N.V.,
Patent Division,
P.O. Box 137
NL-3130 AC Vlaardingen (NL)

(54) **Fat product, in particular lamination margarine**

(57) Fat product, particularly for bakery applications, is provided in the form of sheets or blocks wherein at least 2 sheets or blocks are positioned horizontally on top of each other and these sheets or blocks are together packed in a single enclosure, preferably a wrapper, wherein optionally on the upper contact surface of the sheet or blocks an edible separation material is present in an amount of t g/cm$^2$ and wherein the maximum pressure that is exerted on the upper contact surface of the lowermost sheet or block p expressed in g/cm$^2$ is less than

$$0.018 \, C_{(T)} - 8 + 600 \, t, \text{ all in g/cm}^2,$$

wherein $C_{(T)}$ indicates the hardness of the product as measured in conventional manner at temperature T, wherein T indicates the maximum temperature reached during packing, storage and transportation.
Such fat product is more convenient for both manufacturer and customer, reduces the amount of packaging material needed and thereby reduces the burden on the environment.

EP 0 705 540 A2

Printed by Rank Xerox (UK) Business Services
2.9.16/3.4

## Description

The invention relates to a fat product, particularly bakery margarines and fats and the like, especially for lamination purposes, in the form of sheets or blocks.

For the preparation of baked goods such as puff pastry, croissants, Danish pastry, short bread, cookies etc. bakery fat products are used. Such fat products commonly comprise a continuous fat phase. They may also contain an aqueous phase which is then usually a dispersed aqueous phase. Especially bakery fats and margarines intended for lamination purposes, e.g. for making puff pastry, croissants or Danish pastry are very plastic, they must be able to form very thin layers in the pastry dough. Bakery margarines and fats and the like typically contain flavours and thereby contribute to the taste of the baked product. Such products are designed to include predominantly higher melting triglyceride crystals dispersed in a liquid oil phase. Like usual household margarines and spreads, they may contain $\beta$-carotene which imparts a yellowish colour to the product. Furthermore they may contain appropriate emulsifiers, salts, flavours, proteins etc. Typical properties of bakery fat products are

* slip melting point about 33-42 °C
* dilatation in mm$^3$ per 25 g fat
  at 20 °C about 800 - 1025
  at 30 °C about 500 - 710
  at 35 °C about 150 - 550
* fat content at least about 40 %, preferably at least about 77 %, more preferably 80-90 %, particularly 85-87 %
* typical pH of aqueous phase (if any) about 2.2-4
* C-value indicative of the firmness of the product about 600 - 2500 g/cm$^2$, preferably 700 - 2000 g/cm$^2$ (About the C-value, see Handbuch der Lebensmittelchemie, Michael Bockisch, "Nahrungsfette und -öle", Verlag Ulmer, 1993, p 592-595).

Specifically for lamination fat products, the typical properties are:

* slip melting point 38-42 °C
* dilatation in mm$^3$ per 25 g fat
  at 20 °C about 880 - 1025
  at 30 °C about 610 - 710
  at 35 °C about 440 - 550
* C-value about 800 - 2500 g/cm$^2$, preferably 1000 - 2000 g/cm$^2$.

The typical fat content and aqueous phase pH of the lamination products are as given above for the bakery fat products in general.

In the preparation of laminated dough and the like, e.g. for croissants and Danish pastry, the lamination fat product is usually incorporated according to one of 3 methods, the French, the German and the Dutch or Scottish method. These methods are well known.

According to the German method, the pre-dough is folded around the lamination fat product, while in the French method the lamination fat product is folded around the pre-dough. Then depending on the method employed, a number of "turns" is applied to the dough. In the Dutch or Scottish method the lamination fat product is cut into pieces having approximately the size of a walnut, and these pieces are worked together with the other dough ingredients in a kneading machine to form a dough. During this kneading the pieces of lamination fat product should remain intact. Then 4 double turns are applied.

Usually bakery fat products are supplied to artisanal and industrial bakers in pre-shaped form. In this, care must be taken that parts or pieces of bakery fat product do not stick together and thereby become inconvenient to handle and/or loose their integrity. The art has shown the following developments.

According to DE 17 92 406 lamination fats are extruded to form a strand which are cut to obtain pieces of lamination fat product. Onto this strand or these pieces, as separation material an oil liquid at ambient temperature and having at 20 °C a dilatation value of less than 200 mm$^3$ per 25 g fat is applied in a layer of 0.25-2 mm. The cross-section of the strand can have the shape of a square. Specifically the liquid oil can be a glyceride ester of C4-C10 fatty acids. Such esters can be produced for example from coconut oil by hydrolysing and distilling the fatty acids. The top fraction contains fatty acids with a chainlength of less than C12, which can be esterified with glycerol. The oil may contain or consist of mono/diglycerides. The use of such coating oils can be disadvantageous because their chemical and physical properties may not match with those of the bakery fat products and in the subsequent incorporation in dough they can for example have a negative impact on the taste or the consistency of the product. They can also adversely affect the dough making and baking operation. Applying such liquid oil consumes time and material. Furthermore, the obtained product is not suitable for use in the German and French baking methods described above. GB 1 170 081 discloses plastic bakery fat in the form of small sticks which are provided with a coating of hard fat particles and which are packed in a container. According to GB 1 170 081 the sticks are provided with an edible non-sticky coating. Here the same disadvantages apply as with the use of liquid oil as separation material. Therefore, not having to use such oils or hard fat particles would be desirable. A proposal to achieve this is given in DE 27 49 239. This paper proposes pieces of fat product for baking purposes, i.e. including lamination margarine, without coating, which can be packed together yet remain separable. The fat must have a slip melting point of at least 32 °C and a dilatation at 20 °C of at least 600, while the pieces of fat product are spherical with a diameter of 10-60 mm or cylindrical with a length of 20-150 mm. Consequently, the contact between the fat particles is only linear or point wise, which allows separating them again before use while maintaining their identity. A disadvantage is that such pieces of fat product are only suitable for use in the above described Dutch or Scottish baking method. They are not appropriate for use in the French or German method.

Currently manufacturers of bakery fat product prefer to provide these products in the form of sheets or blocks each of which is packed individually, to the artisanal and industrial bakers. In this way separating materials need not be used. In addition, the sheets or blocks are provided in a form adapted to the intended use. It was not considered feasible not to apply the separate packing of the sheets or blocks. One knew that in the usual operation, if the sheets would be put on top of each other with direct surface contact, they would stick together and thereby loose their identity, they would not remain separable. However, the individual packing of sheets or blocks is labour intensive, in particular also for the subsequent use for which unpacking is required. Furthermore, the large amount of packaging material used is expensive and puts a burden on the environment.

It is an objective of the invention to provide a fat product, particularly for use in bakeries, which avoids the disadvantages of individually packing sheets or blocks of fat product and which allows reduction of the amount of separating material employed. We have found a way to achieve this. Accordingly, the invention provides a fat product in the form of sheets or blocks wherein at least 2 sheets or blocks are positioned horizontally on top of each other and these sheets or blocks are together packed in a single enclosure, wherein optionally on the upper contact surface of the sheets or blocks an edible separation material is present in an amount of t $g/cm^2$ and wherein the maximum pressure that is exerted on the upper contact surface of the lowermost sheet or block p expressed in $g/cm^2$ is less than

$$0.018 \times C_{(T)}\text{-value } (g/cm^2) - 8 \ (g/cm^2) + 600 \times t \ (g/cm^2)$$

wherein the $C_{(T)}$-value indicates the hardness of the product as measured in conventional manner at temperature T, wherein T indicates the maximum temperature during packing, storage and transportation.

Preferred embodiments of the invention are given in claims 2-10.

Especially in case of lamination fat products, which typically have a C-value of 800 - 2500 $g/cm^2$, especially 1000 - 2000 $g/cm^2$ at the temperature of use, it is preferred not to use any separation material.

Then, in the above expression t = 0 and the fat product is designed such that

$$p < 0.018 \ C_{(T)} - 8, \text{ preferably}$$

$$p < 0.018 \ C_{(T)} - 10, \text{ all expressed in } g/cm^2.$$

The manufacturing and handling of the fat product is preferably carried out such that the maximum temperature T of the product during packing, storage and transportation does not substantially exceed the usage temperature of the product, which usually is the temperature in the bakery.

With this expression, depending on the desired firmness of the product at the maximum temperature during packing, transport and storage and on the dimensions and density of the sheets or blocks, it can be assessed how many sheets or blocks can be stacked on top of each other while maintaining separability of the sheets or blocks. If separation material is present in an amount of t $g/cm^2$, the same applies correspondingly. Reversely, for a given desired combination of stacking height, dimensions, and firmness, the required amount of separation material, if any, can be assessed. The pressure p is the pressure on the lowermost sheet or block caused by the sheet(s) or block(s) put on top of it; p does not include atmospheric pressure.

The basic idea of the invention is that in the design of the fat product comprising the plurality of sheets or blocks, the maximum allowed pressure is according to the above expression. The pressure on the upper contact surface of the lowest sheet or block caused by stacking one or more sheets or blocks on top of it, should at no time exceed the maximum pressure p calculated according to the above expression. The relationship between the C-value at the maximum temperature T that may be reached during packing, storage and transport, the amount of separation material applied, if any, and the maximum pressure is important. With a higher amount of separation material or a higher C-value at temperature T, a higher pressure can be tolerated. For the same dimensions and density, then a higher number of sheets or blocks may be put on top of each other. For constant t- and C-value it can easily be calculated how many sheets or blocks can be put on top of each other such that the resulting pressure on the surface of the first or lowermost sheet or block does not exceed the maximum allowable pressure. Of course this requires a careful stacking of the sheet or blocks on top of each other such that the requirement of the invention is observed.

For the choice of edible separation material, if any, substantially only the legal limitations for food products apply. Therefore, as separation material preferably material is used that according to legal standards may be applied in bakery fats or margarines or such like products. Specifically it is preferred to employ materials that are commonly used in such fat products, in particular glycerides, e.g. substantially fully hardened palm, rape or soya oil, mono- and/or diglycerides, particularly glycerolmonostearate and -palmitate, and mixtures of 2 or more of such materials. Preferably the separation material has a slip melting point of at least 40 °C, especially at least 50 °C. The fatty acid residues contained in the separation material preferably consist for at least 60 %, more preferably at least 80 %, especially at least 90 % of fatty acid residues having a chainlength of at least 16 carbon atoms, preferably 16-18 carbon atoms. It is further preferred that the content of saturated fatty acids residues of the fatty acid residues of the separation material is at least 70 %, more preferably at least 90 %. Particularly preferred separation material is glyceride fat that crystallises relatively fast and that forms β-crystals. The glyceride fat is preferably applied to a surface of the sheets or blocks in the form of small particles. Preferably the particle size D3,3 of the separation material is less than 1000 μm, more preferably less than 500 μm, especially less than 300 μm. The D3,3 value indicates the average particle size of the separation material calculated with weighing factors according to volume. See M Alderliesten, Part. Part. Syst. Caract. 7 (1990), 233. In practice, if an edible separation material is applied, preferably it is applied in an amount of at least 30 g/m$^2$, more preferably in an amount of 50 - 500 g/m$^2$. In the above considerations, it is a supposition that the separation materials employed in the context of the invention, for a given amount applied, are comparably effective. We found this to be valid at least when using as separation material particles of glyceride fat as described above.

According to the invention it is possible to correspondingly reduce the amount of edible separation material applied to the upper surface of the second and subsequent sheets or blocks relative to the amount applied on the first/lowermost sheet or block. This can be done according to the above given expressions.

The invention is particularly valuable for fat products in the form of sheets. Preferably, the length and width of the sheets are 240-450 mm, more preferably 270-400 mm. The height of each sheet preferably is 10-30 mm, more preferably 16-25 mm. The weight of the individual sheets is preferably 1.5-3 kg, more preferably 1.8-2.5 kg. It is particularly preferred to pack at least 3 sheets, especially 4-12 sheets together in an enclosure. Most preferred is to pack 4-6 sheets together in a single enclosure. If no separation material is applied, especially for lamination fat products, the maximum number of sheets stacked on top of each other is preferably 10. If separation material is used, a higher number of sheets can normally be placed on each other, but preferably this number should not exceed 120 sheets.

The solid fat content of the fat of the fat product at the temperature T, as measured by NMR, the $N_{(T)}$ value is preferably at least 24, more preferably at least 30, especially 33-55. Here also T indicates the maximum temperature during packing, storage and transportation. Specifically for lamination fat product, $N_{(T)}$ is preferably at least 27, more preferably at least 32, especially 34-55.

The $N_{(T)}$ value can be measured as described in Fette, Seifen, Anstrichmittel, 80(5), (1978), 180-186.

The above indicated C- and N- values depend on the temperature. Both should be measured at the maximum temperature that the product reaches during the period between packing by the manufacturer and unpacking by the customer.

The enclosure in which the sheets or blocks are packed together, preferably is a wrapper. Although the sheets or blocks stacked horizontally on top of each other can be packed together for example in a bag, for the customer, unpacking is easier, if packing is done in a wrapper. The permeability of the packing material employed for oxygen and water vapour is suitably chosen in dependence of the fat product for which it is to be used. The requirements fluctuate strongly with the sensitivity, keepability, quality and storage and transport conditions of the fat product. Preferably the oxygen permeability of the packing material at 23 °C and 85 % relative humidity is less than 2000 ml/m$^2$.day.bar, in special cases less than about 1 ml/m$^2$.day.bar. The water vapour permeability at 23 °C preferably is less than 2 g/m$^2$.day. As packaging material for example special papers or laminates can be used. We found that laminates of paper/HDPE (e.g. overlacquer + print / paper (50 g/m$^2$) / glue / HDPE (25 g/m$^2$)) and of aluminium / paper / PE (e.g. overlacquer + print / aluminium (18 g/m$^2$) / glue / paper (50 g/m$^2$) / PE (20 g/m$^2$)) are particularly suitable. If parchment paper is used as packaging material, the salt content (NaCl) should not exceed 1 %. In addition, the migration limits of packaging material according to EG guideline 90/297 EWG of 10.04.1992 should be observed.

The size / dimension of the wrapper foil is chosen in dependence of the dimension of the sheet or blocks of fat product stacked on top of each other, to be packed together. For example to pack 5 sheets each of size 380 x 285 x 20 mm suitably a wrapper size of 820 x 540 mm is employed.

To ensure that, from the production until the use of the product, the maximum pressure in the composite fat product of sheets or blocks is not exceeded, preferably a secondary packaging, especially a cardboard outer is applied. The stability of the outer should ensure that the maximum pressure exerted on the upper surface of the lowermost sheet or block is not exceeded. Thus, when during storage or transportation a number of composite food products each comprising 2 or more sheets or blocks packed together in an enclosure, are to be put on top of each other, putting each composite fat product into an outer can prevent that the pressure working on the sheets at the bottom of the pile exceeds the maximum allowable pressure. In such a case, the cardboard outers carry most of the weight. The outers can be chosen of such design and strength that, even if 5 or 10 of these outers, each comprising a composite fat product, are stacked on top of each other, the pressure that works on the upper surface of the lowest sheet or block, even in the outers at the bottom of the pile is substantially only the pressure generated by the other sheet(s) or block(s) in the same composite fat product. Depending on the design of the customers operation it can also be desirable to pack 2 or more packs of the composite fat product, each having its own primary packaging, together in a single secondary packaging. If in such a case 2 or more of the packs of the composite fat product are placed on top of each other, then the upper pack(s) will also contribute to the pressure that works on the lowermost sheet or block within the outer. Then especially care should be taken that this pressure on the lowest sheet or block does not exceed the maximum allowable pressure, considering its $C_{(T)}$ - value and the, optional, amount of edible separation material.

The dimensions of the secondary packaging are chosen in relation to the dimensions of the primary pack of composite fat product and depending on whether one or more of these packs are to be put in the secondary pack. The secondary pack should fit more or less tightly around the primary pack or packs, but without exerting significant pressure on it. The required stability of the secondary packaging depends on the number of secondary packs to be put on top of each other during the logistic operations. If for example a composite fat product of 5 sheets, each with dimensions of 380 x 285 x 20 mm and a net weight of about 2.0 kg, is packed in a telescope cardboard outer as secondary packaging, and such packs are placed on a Euro-pallet in interlocking Stacking in 10 layers of 6 outers each, then for the outer (height bottom part = height lid part) the following dimensions and criteria apply: inner dimensions about 390 x 291 x 110 mm, material composition of bottom and lid part for example Kraft paper / fluting of semi chemical pulp / Kraft paper. The thickness of the individual paper components are chosen in accordance with logistical requirements to provide the required compression strength. For a Euro pallet on which 10 layers of 6 outers of 10.6 kg gross weight each, are transported in interlocking stacking, the outers should have a compression strength of at least about 3300 g/cm$^2$, preferably at least about 4500 g/cm$^2$. Preferably under such pressure substantially no deformation of the outers should occur.

In view of the nature of the fat product, the primary packaging (wrapper) and the secondary packaging (cardboard outer) should meet certain standards regarding microbiological quality, in particular to achieve a sufficiently good keepability. The total plate count should be less than 6 per 100 cm$^2$, moulds less than 2 per 100 cm$^2$. Other relevant factors to consider are sticking of fat product to the wrapper, tendency to delaminate (in case of laminate wrappers), printability, safety etc. Such considerations are taken into account in the choice of material to be used as primary or secondary packaging for use according to the invention. For example, in the development of a new product with a new packaging, a storage test is done e.g. with 5 horizontally stacked sheets of fat product packed together in a single wrapper, e.g. for 15 weeks at a temperature of 18-20 °C, while monitoring all relevant product properties weekly or biweekly during the storage period.

The advantages of the invention are easily recognisable: The amount of primary packaging material can be drastically reduced. This not only means a reduction of the material employed, but also a reduction of labour, both for the manufacturer and for the customer, and the burden on the environment is reduced. Thus, the invention solves a number of problems in a surprisingly elegant manner. Separation material need not be used, or if it is used, the minimum amount effective to achieve the desired result can easily be assessed for different products.

Parts, proportions and percentages refer to weight, unless indicated otherwise.

## Example 1

A lamination fat product in the form of sheets each with dimensions of 380 mm x 285 mm x 20 mm was used. The weight per sheet was 2 kg. The C-value of the product at 20 °C was 1400 g/cm$^2$. The fat content was 80.2 %. The N20 value was 41. As wrapper material a laminate of paper and HDPE (high density polyethylene) with dimensions 820 mm x 540 mm was used. The precise composition of the laminate was overlacquer + print / paper (50 g/m$^2$) / glue / HDPE (25 g/m$^2$).

Five sheets of the lamination margarine were horizontally stacked on top of each other, which did not exceed the maximum pressure of 17 g/cm$^2$ on the upper contact surface of the lowest sheet. The applicable maximum temperature T was 20 °C. The 5 sheets were wrapped together in the wrapper and then put in a cardboard outer of telescope type. The inner dimensions were 390 mm x 291 mm x 110 mm. A number of outers thus prepared were put on a pallet such that the pressure exerted by the weight of the product on the lowest layer of outers was about 120 kg per outer, corresponding to about 100 g/cm$^2$. The compression strength of the outers was substantially more than 10 times this value, and therefore sufficient to allow handling and transportation without damage to the product.

## Example 2

A croissant margarine in the form of sheets of dimensions 380 mm x 285 mm x 20 mm and weighing 2 kg per sheet was used

C 20 : 1100 g/cm$^2$

N 20 : 36

Fat content 80.2 %.

As separation material, saturated monoglyceride (Hymono[R] 8903 ex Quest International, Naarden, Holland) in the form of small particles was applied on one side of the sheet in an amount of 0.01 $g/cm^2$. The wrapper used was the same as in Example 1.

For a T of 20 °C, the maximum allowable pressure on the upper surface of the lowermost sheet is 18 $g/cm^2$. Five sheets of the margarine are stacked on top of each other, the side with the separation material applied to it being used as the upper side, and this stack was wrapped in the wrapper. The composite fat product thus obtained was placed in a cardboard outer and the outers thus obtained were then palletised as described in Example 1.

## Claims

1. Fat product in the form of sheets or blocks wherein at least 2 sheets or blocks are positioned horizontally on top of each other and these sheets or blocks are together packed in a single enclosure, wherein optionally on the upper contact surface of the sheets or blocks an edible separation material is present in an amount of t $g/cm^2$ and wherein the maximum pressure that is exerted on the upper contact surface of the lowermost sheet or block p expressed in $g/cm^2$ is less than

$$0.018 \times C_{(T)}\text{-value (g/cm}^2) - 8 \text{ (g/cm}^2) + 600 \times t \text{ (g/cm}^2)$$

wherein the $C_{(T)}$-value indicates the hardness of the product as measured in conventional manner at temperature T, wherein T indicates the maximum temperature during packing, storage and transportation.

2. Fat product according to claim 1 wherein

$$p \text{ (g/cm}^2) < 0.018 \times C_{(T)}\text{-value (g/cm}^2) - 10 \text{ (g/cm}^2) + 600 \times t \text{ (g/cm}^2).$$

3. Fat product according to claims 1-2 wherein the fat product is a lamination margarine.

4. Fat product according to claims 1-3 wherein the sheets or blocks are packed together in a single wrapper.

5. Fat product according to claims 1-4 in the form of sheets wherein the length and width of the sheets are 240-450 mm, preferably 270-400 mm and wherein the height of each sheet is 10-30 mm, preferably 16-25 mm.

6. Fat product according to claims 1-5 in the form of sheets wherein each sheet has a weight of 1.5-3 kg, preferably 1.8-2.5 kg.

7. Fat product according to claims 1-6 wherein the solid fat content $N_{(T)}$ of the fat of the product at temperature T is at least 24, preferably at least 30, more preferably 33-55.

8. Fat product according to claims 1-7 in the form of sheets wherein at least 3 sheets, preferably 4-12 sheets, more preferably 4-6 sheets are packed together in a single enclosure.

9. Fat product according to claims 1-8 packed in a secondary packaging, preferably a cardboard outer of sufficient strength to withstand a stacking pressure of at least 3300 $g/cm^2$, preferably at least 4500 $g/cm^2$.

10. Fat product according to claims 1-9 comprising as separation material a glyceride fat having a slip melting point of at least 40 °C, preferably at least 50 °C, in an amount of at least 30 $g/m^2$, preferably 50-500 $g/m^2$.